**Europäisches Patentamt**

**European Patent Office**

**Office européen des brevets**

(19)

(11) Veröffentlichungsnummer : **0 455 677 B1**

(12)

# EUROPÄISCHE PATENTSCHRIFT

(45) Veröffentlichungstag der Patentschrift :
**30.09.92 Patentblatt 92/40**

(51) Int. Cl.$^5$ : **C05D 5/00**, C01F 5/00

(21) Anmeldenummer : **90902211.3**

(22) Anmeldetag : **09.01.90**

(86) Internationale Anmeldenummer :
**PCT/EP90/00044**

(87) Internationale Veröffentlichungsnummer :
**WO 90/08115 26.07.90 Gazette 90/17**

(54) **VERFAHREN ZUR HERSTELLUNG EINES MITTELS ZUR BODENMELIORATION.**

(30) Priorität : **13.01.89 AT 58/89**

(43) Veröffentlichungstag der Anmeldung :
**13.11.91 Patentblatt 91/46**

(45) Bekanntmachung des Hinweises auf die
Patenterteilung :
**30.09.92 Patentblatt 92/40**

(84) Benannte Vertragsstaaten :
**BE DK GB IT SE**

(56) Entgegenhaltungen :
**EP-A- 0 192 954**
**DE-A- 2 626 903**
**US-A- 4 402 891**
**US-A- 4 410 350**

(56) Entgegenhaltungen :
**Chemical Abstracts, Vol. 103, No.13, September 1985, (Columbus, Ohio, US), see page 546, abstract No. 104006t &JP-A-8551683 (NEW JAPAN CHEMICAL INDUSTRY CO. LTD) 23. März 1985, siehe Zusammenfassung**

(73) Patentinhaber : **RADEX-HERAKLITH INDUSTRIEBETEILIGUNGS AKTIENGESELLSCHAFT**
**Opernring 1**
**A-1010 Wien (AT)**

(72) Erfinder : **WEISS, Viktor**
**A-6395 Hochfilzen 156 (AT)**
Erfinder : **KOFLER, Günter**
**A-6395 Hochfilzen 103 (AT)**

(74) Vertreter : **Becker, Thomas, Dr., Dipl.-Ing. et al**
**Patentanwälte Becker & Müller**
**Eisenhüttenstrasse 2**
**W-4030 Ratingen 1 (DE)**

EP 0 455 677 B1

## Beschreibung

Die Erfindung betrifft ein Verfahren zur Herstellung eines granulatförmigen Mittels zur Melioration geschädigter und/oder mängelbehafteter Böden, insbesondere in der Land-und Forstwirtschaft.

In den letzten Jahren wird in zunehmendem Maße eine Verschlechterung des Wachstums beziehungsweise der Gesundheit zahlreicher Pflanzen beobachtet. Größere Teile des Waldbestandes sind erkrankt.

Es gibt bereits große Waldbereiche, in denen die Bäume praktisch kein Wachstum mehr zeigen, Blätter und Nadeln vergilben und abfallen und ohne zusätzliche Eingriffe von außen absterben. Gleiches gilt im wesentlichen für den landwirtschaftlichen Bereich.

Die den Waldschäden zugrundeliegenden Ursachen sind noch nicht vollständig geklärt, unter anderem aber aufdie Zufuhr von Schadstoffen aus der Atmosphäre zurückzuführen, die ein Absenken des pH-Wertes im Boden und in weiterer Folge Störungen des Nährelementkreislaufes in der Vegetation verursachen.

In diesem Zusammenhang spielt insbesondere der sogenannte "saure Regen", also die Belastung der Böden mit $SO_2$ oder dergleichen eine wichtige Rolle.

Der Nährelementkreislauf spielt insbesondere beim Wald eine große Bedeutung. Die Bäume nehmen über ihre Wurzeln lebensnotwichtige Nährelemente aus dem Boden auf, wobei ein Teil im neugebildeten Holz, Zweigen und Nadeln festgelegt wird, ein wesentlich größerer Teil aber wieder über Zweige, Nadeln oder Blätter austritt und beispielsweise über den Regen abgewaschen und in den Boden rückgeführt wird. Ferner werden durch Laub- und Nadelfall, durch Früchte, tote Zweige, Rinden etc. erhebliche Nährelementmengen auf die Bodenoberfläche zurückgeführt. Während man früher der Meinung war, daß die Nährelementversorgung des Waldes auf diese Weise ein für allemal gesichert sei, weiß man heute, daß diese Annahme insbesondere für Standorte mit armen oder degradierten Böden ebenso für Gebiete, in denen der Nährstoffkreislauf beispielsweise durch ungenügende Umwandlung des Rohhumus oder durch Streunutzung gestört ist und Gebiete mit hoher Luftverschmutzung, nicht zutrifft.

Daneben spielen aber auch für die Störung des Nährelementkreislaufes Faktoren wie Art des Bodens, Wasserzu- und -abfuhr eine Rolle.

Bisherige Versuche, die Bodenqualität wieder zu verbessern, um den Nährstoffkreislauf wieder richtig einzustellen, sind im wesentlichen durch eine ausgewählte mineralische Düngung gekennzeichnet, um so vor allem Stickstoff, Phosphor und Kalium, aber auch Magnesium, Kalzium und Spurenelemente dem Boden zuzuführen.

Nachdem festgestellt wurde, daß die Kalkung stark übersäuerter Böden Nährstoff-Mangelerscheinungen nicht charakteristisch beseitigt, ist man dazu übergegangen, Fremd-Nährstoffe enthaltende Kalke anstelle von einem Kalksteinmehl einzusetzen. In jedem Fall aber bildet sich Gips und damit eine inerte Kruste, so daß zwar eine pH-Wert-Beeinflussung erfolgt, jedoch keine dauerhafte Bodenmelioration.

Aus der US-A-4,410,350 ist eine physikalische Mischung aus einem Düngemittel und Pellets bekannt, wobei letztere dazu dienen, eine Hydratation des Düngemittels und damit eine Verkrustung des Düngemittels zu verhindern. Die Pellets dienen dabei als Träger für das Düngemittel beziehungsweise zur Aufnahme von Wasser. Sie werden aus dem Staub eines Dolomit-Ofens gebildet und enthalten neben Magnesiumoxid große Mengen an Kalziumoxid. Die vorstehend genannte Verkrustung wird dabei also bewußt in Kauf genommen.

Der Erfindung liegt die Aufgabe zugrunde, ein Verfahren zur Herstellung eines Mittels zur Melioration geschädigter und/oder mängelbehafteter Böden anzubieten, mit dem sich der Pflanzenwuchs, insbesondere Baumwuchs nachhaltig und nicht nur kurz-, sondern auch langfristig verbessern läßt, wobei insbesondere eine kontinuierliche, zeitabhängige sukzessive Qualitätsbeeinflussung des behandelten Bodens gewünscht wird.

Der Erfindung liegt zunächst die bisher vernachlässigte Erkenntnis zugrunde, daß die Versorgung der genannten Böden mit einer ausreichenden Menge an Magnesium entscheidend für die Behandlung geschädigter und/oder mängelbehafteter Böden beziehungsweise der darin wachsenden Pflanzen ist.

Magnesium hat als essentielles Nährelement im pflanzlichen Stoffwechsel eine ganze Reihe wichtige Funktionen zu erfüllen. Es ist Strukturbestandteil von Chlorophyllen, Ribosomen und Zellwandkomponenten und ist als Co-Faktor an der Aktivierung zahlreicher Enzyme beteiligt.

Aus Versuchen ist bekannt, daß der Mg-Gehalt von Nadeln einer Kiefer oder Fichte mindestens 0,03 Gew.-% betragen muß, um dem Baum langfristig ein Überleben zu sichern (sogenannter Letalbereich).

Die Behebung des entsprechenden Nährstoffmangels im Zuge der genannten, bekannten Düngemaßnahmen stellt nur eine Übergangslösung dar, da die Wirksamkeit der entsprechenden Dünger nur kurzfristig ist. Darüber hinaus enthalten bekannte Dünger Magnesium vorwiegend in Salzform, zum Beispiel als $MgSO_4 \cdot 2H_2O$ (Kieserit) oder als $MgSO_4 \cdot 7H_2O$ (Bittersalz), wodurch weitere unerwünschte Wirkstoffe wie "S" in den Boden eingebracht werden.

Darüber hinaus ist die Löslichkeitsrate der genannten Magnesiumverbindungen im Boden mittelspezifisch konstant, das heißt, es kann nur eine quasi einmalige Wirkung erzielt werden.

Die Erfindung hat weiter erkannt, daß auch die Verwendung von Magnesiumcarbonat alleine bestimmte Nachteile hat. Zum einen ist die Löslichkeit des Carbonates relativ gering. Um sie zu erhöhen,.müssen Materialien mit großer Oberfläche eingesetzt werden. Das Material kann zwar theoretisch in entsprechender Pulverform konfektioniert werden, ist aber als Pulver nur schwer ausbringbar und würde zum Beispiel bei einem Abwurf von einem Flugzeug unkontrolliert verweht beziehungsweise trocken oder als-Suspension im Nadel- oder Blattwerk adsorbiert werden und nur nach und nach in den Boden gelangen. Eine Aufbereitung des Carbonates mit einem Bindemittel, zum Beispiel Sorelzement, ermöglicht zwar eine anwendungsspezifische Konfektionierung, führt aber nicht aus dem Problem heraus, daß eine Mg-Abgabe an den so behandelten Boden nur langfristig und innerhalb eines relativ engen Zeitintervalls möglich ist.

Eine Düngung mit Mg-Kauster alleine führt zwar zu einer raschen Anhebung des Mg-Gehaltes im Boden, aufgrund einer wesentlich größeren Löslichkeit gegenüber Magnesiumcarbonat, auch hier ergeben sich aber wieder Probleme der Konfektionierung und zeitabhängigen Wirksamkeit des Stoffes.

Die Erfindung schlägt nun in ihrer allgemeinsten Ausführungsform ein Verfahren vor, bei dem feinteiliges Magnesiumcarbonat mit feinteiligem Magnesiumoxid gemeinsam mit einem Bindemittel unter Wasserzugabe gemischt, granuliert und anschließend die so hergestellten Granalien zu einem granulatförmigen Meliorationsmittel getrocknet werden, derart, daß das fertige Mittel $MgCO_3$ aus der ursprüng-Lichen Mischungs Komponente, recarbonatisiertes $MgCO_3$, $Mg(OH)_2$ als Reaktionsprodükt und $MgO$ aus der Ursprüng-Lichen Mischüngskomponente nebeneinander enthält.

Überraschenderweise führt die Mischung von Mg-Kauster und Mg-Carbonat nicht zu einer physikalischen Addition der vorstehend genannten Eigenschaften, vielmehr kommt es zu einem synergistischen Zusammenwirken beider Komponenten, wie nachstehend näher erläutert wird:

Für den Erfindungsgedanken ist die Feinteiligkeit der Ausgangsmaterialien eine wichtige Voraussetzung. Durch die große Oberfläche werden große Reaktionsflächen angeboten. Durch die Zugabe von Wasser beim Mischen der Komponenten reagiert dieses mit $MgO$ unter Bildung von Magnesiumhydroxid, das insoweit eine in-situ-Bindemittelfunktion übernimmt und während des Granulierens (Pelletisierens) ohne separate Bindemittel eine Agglomerierung und Kompaktierung der einzelnen Mischungsbestandteile ermöglicht.

Beim anschließenden Trocknungsvorgang, der insbesondere in $CO_2$- reicher Atmosphäre durchgeführt werden sollte, wozu beispielsweise entsprechende Ofenabgase genutzt werden können, kommt es zu einer teilweisen Carbonatisierung (Recarbonatisierung) der gebildeten Reaktionskomponenten, so daß im fertigen, getrockneten Produkt anschließend folgende Komponenten nebeneinander vorliegen:

– $MgCO_3$ (aus ursprünglicher Mischungskomponente)
– $MgCO_3$ (recarbonatisiertes Material)
– $Mg(OH)_2$ (als Reaktionsprodukt)
– $MgO$ (aus ursprünglicher Mischungskomponente)

Aufgrund zunehmender Löslichkeit vom - Carbonat über das - Hydroxid zum - Oxid wird damit zunächst ein dreistufiger Reaktionsmechanismus in einem Mittel angeboten, das heißt, es stehen in einem Mittel verschiedene Komponenten zur Verfügung, die zu unterschiedlichen Zeiten ihre Wirksamkeit im Boden entfalten. Überraschenderweise hat sich dabei herausgestellt, daß das in den Granalien vorhandene Magnesiumcarbonat aus dem Ursprungsmaterial eine geringere Auflösegeschwindigkeit aufweist als das recarbonatisierte Material, das im übrigen röntgenamorph vorliegt, so daß eine vierte Reaktionsstufe in-situ ausgebildet wird, und zwar ausgehend von lediglich zwei gängig vorhandenen Mg-haltigen Stoffen in einem einfachen Verfahren, wobei ein granulatförmiges Mittel hergestellt wird, das leicht ausbringbar ist und aufgrund seines hohen spezifischen Gewichtes nicht verweht und ohne weiteres auch bei einem Abwurf aus einem Flugzeug nicht auf ,Ästen, Blättern oder Nadeln haften bleibt, sondern unmittelbar auf und in den Boden gelangt.

Die unterschiedlichen Löslichkeitsgeschwindigkeiten der einzelnen Komponenten des Mittels führen dazu, daß ausgehend von einer Sofortwirkung, insbesondere durch den Bestandteil $MgO$ eine Langzeitwirkung bis zu zehn Jahren und darüber hinaus angenommen werden kann (wobei dann insbesondere das schwer lösliche Carbonat aus dem Ursprungsmaterial seine Wirkung entfalten wird).

Selbstverständlich sind die Mengenanteile,der einzelnen Reaktionskomponenten abhängig vom ursprünglichen Mischungsverhältnis Magnesiumcarbonat/Magnesiumoxid. Dies sollte bevorzugt zwischen 10 : 1 und 2 : 1 liegen, wobei ein exaktes Mischungsverhältnis anhand der jeweils gegebenen Bodenqualitäten beziehungsweise den gewünschten zeitabhängigen Wirksamkeiten eingestellt werden kann.

Je feiner das Material ist, um so höher ist die Reaktionsoberfläche und um so höher ist die Wirksamkeit des Mittels insgesamt. Auch insoweit wird die Reaktion der Ausgangskomponenten untereinander und mit dem Wasser beeinflußt. Vorzugsweise sollten die Ausgangsstoffe in einer Kornfraktion kleiner 200 µm vorliegen, wobei es besonders bevorzugt ist, den überwiegenden Teil (über 50 Gew.-%) in einer Kornfraktion kleiner 40 µm einzusetzen.

In diesem Zusammenhang sei darauf hingewiesen, daß bei Bedarf dem Mittel beziehungsweise dessen Ausgangskomponenten auch Züsatzstoffe zugegeben werden können, insbesondere um eine gegebenenfalls noch komplexere Bodenmelioration zu ermöglichen. In diesem Zusammenhang wird an unterschiedlichste Stoffe gedacht: zum einen können dies kleinere Mengen zusätzlicher Bindemittel sein, vorzugsweise wird es sich aber um Fremd-Nährstoffe, abhängig von der jeweiligen Bodenqualität, handeln. Ebenso kann daran gedacht werden, Zusatzmittel wie Zeolithe beizumischen, die das Ionenaustauschvermögen aktivieren und/oder das Wasseranlagerungsvermögen regulieren. Auch die Zugabe kleinerer Mengen bekannter Dünger ist möglich, wenngleich der Kerngedanke der Erfindung auf der Zurverfügungstellung eines Mg-haltigen Mittels liegt.

Wie bereits oben ausgeführt, kann das Mittel per Hand oder über entsprechende Fahrzeuge auf den Boden aufgestreut werden, es kann aber ebenso auch von einem Flugzeug aus über Wäldern abgeworfen werden. In jedem Fall bewirkt der Einsatz des erfindungsgemäßen Mittels nicht nur eine pH-Wert-Korrektur, abhängig von den gewählten Ausgangsstoffen und deren Konzentrationen, sondern auch eine Optimierung des Nährelementkreislaufes der in dem mit dem Mittel behandelten Böden wachsenden Pflanzen.

## Patentansprüche

1. Verfahren zur Herstellung eines granulatförmigen Mittels zur Melioration geschädigter und/oder mängelbehafteter Böden auf der Basis eines Mg-haltigen Stoffes, bei dem feinteiliges Mg-Carbonat mit feinteiligem MgO unter Wasserzugabe derart gemischt, granuliert und anschließend die so hergestellten Granalien getrocknet werden, daß das fertige Mittel $MgCO_3$ aus der ursprünglichen Mischungskomponente, recarbonatisiertes $MGCO_3$, $Mg(OH)_2$ als Reaktionsprodukt und MgO aus der ursprünglichen Mischungskomponente nebeneinander enthält.

2. Verfahren nach Anspruch 1 mit der Maßgabe, daß die Mg-haltigen Ausgangsstoffe in einer Kornfraktion kleiner 200 µm eingesetzt werden.

3. Verfahren nach Anspruch 1 oder 2 mit der Maßgabe, daß die Mg-haltigen Ausgangsstoffe in einer Kornfraktion mit einem überwiegenden Anteil kleiner 100 µm eingesetzt werden.

4. Verfahren nach einem der Ansprüche 1 bis 3 mit der Maßgabe, daß die Mischungskomponenten Mg-Carbonat und MgO im Gewichtsverhältnis 10 : 1 bis 2 : 1 eingesetzt werden.

5. Verfahren nach einem der Ansprüche 1 bis 4 mit der Maßgabe, daß die Trocknung der Granalien in $CO_2$-reicher Atmosphäre durchgeführt wird.

6. Verfahren nach einem der Ansprüche 1 bis 5, wobei zur Trocknung der Granalien warme Ofenabgase eingesetzt werden.

7. Verfahren nach einem der Ansprüche 1 bis 6 mit der Maßgabe, daß die Granulierung so geführt wird, daß die gebildeten Granalien einen mittleren Durchmesser zwischen 0,5 und 8 mm aufweisen.

8. Verfahren nach Anspruch 7 mit der Maßgabe, daß die Granulierung so geführt wird, daß die gebildeten Granalien einen mittleren Durchmesser zwischen 1 und 4 mm aufweisen.

9. Verfahren nach einem der Ansprüche 1 bis 8, bei dem als weitere Bindemittel-Komponente für die Granulierung des Mg-Carbonats Sorelzement, Sulfitablauge, Melasse, Carboxymethylcellulose, Stärke , Ton, Bentonit und/der Pilzmycelen eingesetzt wird (werden).

10. Verfahren nach Anspruch 9, bei dem der Gehalt der zusätzlichen Bindemittel-Komponente auf maximal 20 Gew.-%, bezogen auf die Mischungskomponenten MgO und Mg-Carbonat-, begrenzt wird.

11. Verfahren nach einem der Ansprüche 1 bis 11 mit der Maßgabe, daß dem Mittel ein Stoff zugesetzt wird, der das Ionenaustauschvermögen des Mittels aktiviert und/ oder das Wasseranlagerungsvermögen reguliert.

## Claims

1. Process for manufacturing of a granulate like product for amelioration of damaged and/or defective soils on the basis of a Mg-containing substance, in which finely divided Mg-carbonate is mixed with finely divided MgO under addition of water, granulated and the so produced granules are dried thereafter in such a way, that the final product presents $MgCO_3$ from the basic mixing component, recarbonated $MgCO_3$, $Mg(OH)_2$ as a reaction product and MgO from the basic mixing component one beneath the other.

2. Process according to claim 1 with the proviso that the Mg-containing basic substances are provided in a fineness of grain less than 200 μm.

3. Process according to claim 1 or 2 with a proviso that the Mg-containing substances are provided in a fineness of grain with a predominant part being 100 μm or less.

4. Process according to one of claims 1 to 3 with the proviso that the mixing components Mg-carbonate and MgO are provided in a weight ratio of 10 : 1 to 2 : 1.

5. Process according to one of claims 1 to 4 with the proviso that drying of the granules is achieved in a $CO_2$-rich atmosphere.

6. Process according to one of claims 1 to 5, whereby warm flue gases from a furnace are used for drying the granules.

7. Process according to one of claims 1 to 6 with the proviso that granulation is carried out so that the formed granules present an average diameter between 0,5 and 8 mm.

8. Process according to claim 7 with the proviso that granulation is carried out so that the formed granules present an average diameter between 1 and 4 mm.

9. Process according to one of the claims 1 to 8 in which magnesia cement, sulphite liquor, molasses, carboxymethylcellulose, starch, clay, bentonite and/or fungus mycelene are added as a further binder component for granulation of Mg-carbonate.

10. Process according to claim 9 in which the content of the additional binder component is limited to 20 percent by weight maximum, related to the mixing components MgO and Mg-carbonate.

11. Process according to one of claims 1 to 11 with the proviso that a substance is added to the product, activating its ion exchange capacity and/or its water absoption capacity.

**Revendications**

1. Procédé de préparation d'un produit granuleux destiné à l'amendement de sols endommagés et/ou déficients à base d'une substance contenant du Mg, caractérisé en ce que l'on mélange du carbonate de Mg en fines particules à du MgO en fines particules, par addition d'eau, on granule ce mélange puis on sèche les granulés ainsi obtenus de telle manière, que le produit final présente du $MgCO_3$ provenant des composants d'origine du mélange, du $MgCO_3$ recarbonatée, du $MG(OH)_2$ comme produit de réaction et du MgO provenant des composants d'origine du mélange tous ensemble.

2. Procédé selon la revendication 1, caracterisé en ce que les substances d'origine contenant du Mg sont utilisées dans une fraction granulométrique inférieure à 200 μm.

3. Procédé selon la revendication 1 ou 2, caractérisé en ce que les substances d'origine contenant du Mg sont utilisées dans une fraction granulométrique dont la majorité des grains est inférieure à 100 μm.

4. Procédé selon l'une quelconque des revendications 1 à 3, caractérisé en ce que les constituants du mélange carbonate de Mg et MgO sont utilisés dans un rapport variant entre 10 à 1 et 2 à 1.

5. Procédé selon l'une quelconque des revendications 1 à 4, caractérisé en ce que le séchage des granulés s'effectue dans une atmosphère riche en $CO_2$.

6. Procédé selon l'une quelconque des revendications 1 à 5, caractérisé en ce qu'on utilise des gaz chauds évacués d'un four pour sécher les granulés.

**7.** Procédé selon l'une quelconque des revendications 1 à 6, caractérisé en ce que la granulation s'effectue de manière que les granulés formés présentent un diamètre moyen compris entre 0,5 et 8 mm.

**8.** Procédé selon la revendication 7, caractérisé en ce que la granulation s'effectue de manière que les granulés formés présentent un diamètre moyen compris entre 1 et 4 mm.

**9.** Procédé selon l'une quelconque des revendications 1 à 8, caractérisé en ce qu'on utilise, comme autre liant pour la granulation du carbonate de Mg, du ciment à la magnésie, de la lessive de sulfite usée, de la mélasse, de la carboxyméthylcellulose, de l'amidon, de l'argile, de la bentonite et/ou du mycélium de champignons.

**10.** Procédé selon la revendication 9, caractérisé en ce que la proportion du constituant supplémentaire de liant est limitée à 20 % en poids au maximum par rapport aux constituants du mélange MgO et carbonate de Mg.

**11.** Procédé selon l'une quelconque des revendications 1 à 10, caractérisé en ce qu'on ajoute au produit une substance qui active le pouvoir d'échange d'ions du produit et/ou régule son pouvoir hygroscopique.